# EUROPEAN PATENT APPLICATION

(11) **EP 4 094 815 A2**
(43) Date of publication of application: **30.11.2022**
(21) Application number: 22175606.7
(22) Date of filing: 26.05.2022
(51) Int. Cl.: A63F 13/52, G06T 15/40

(54) **VIEWABILITY TESTING IN A COMPUTER-GENERATED ENVIRONMENT**

(30) Priority: 28.05.2021 US 202117303453; 29.07.2021 US 202163227140 P; 04.03.2022 US 202263316841 P
(71) Applicant: Bidstack Group PLC, London E20 3BS (GB)
(72) Inventor: KOKINS, Arv ds, London, E20 3BS (GB); PETRUZZELLI, Francesco, London, E20 3BS (GB)
(74) Representative: EIP

(57) **Abstract**

A computer-implemented method of determining an extent to which an object in a computer-generated scene is visible from a virtual camera, including rendering the computer-generated scene, generating a plurality of points distributed across a surface of the object, determining a depth map value for each point within a field of view of the virtual camera, determining whether each such point is visible from the perspective of the virtual camera based on a comparison between the determined depth map value for the point and a corresponding one or more depth map values stored in a depth buffer populated during the rendering, and determining the extent to which the object is visible in dependence on which of the plurality of points are determined to be visible from the perspective of the virtual camera.

## Description

### BACKGROUND OF THE INVENTION

### Field of the Invention

The present disclosure relates to determining an extent to which an object in a computer-generated scene is visible from a perspective of a virtual camera. The disclosure has particular, but not exclusive, relevance to determining a degree of occlusion of an object in a computer-generated scene using graphics processing hardware.

### Description of the Related Technology

The popularity of video games has risen meteorically, and at the global video game industry is currently worth more than the music and film industries combined. In the early years of gaming, video game developers and associated entities made money through the sale of video games on physical media (laser discs and cartridges). Nowadays, video games are more often downloaded or even streamed onto a connected gaming device such as a personal computer (PC), games console or smartphone. Whilst this model still allows commercial entities to make money from the sale of video games, it is common for further revenue streams to be pursued based on the sale of advertising space, including advertising space within the video games themselves. In the context of video games, adverts may be presented to a user as part of a loading screen or menu, or alternatively may be rendered within a computer-generated environment during gameplay, leading to the notion of in-game advertising. For example, in a sports game, advertising boards within a stadium may present adverts for real-life products. In an adventure game or first-person shooting game, adverts for real-life products may appear on billboards or other objects within the game environment.

Revenue models based on the sale of advertising space are ubiquitous in the context of film and television, as well as for websites and social media applications. Advertisers are typically charged in dependence on the expected or actual reach of a given advert, or in other words the expected or actual number of "impressions" of the advert experienced by consumers. For television and film, an advertising fee may be negotiated in dependence on a number of showings of the advert and a predicted audience size for each showing. For a website or social media application, the advertising fee may be related to a number of page views or clicks. Distribution of an advert may then be controlled in dependence on these factors.

In the above cases, it is technically straightforward to predict and measure the number of advertising impressions experienced by users. For video games, the situation is different. Because different players will experience a given video game differently depending on actions taken by the players and/or random factors within the video game code, it is not generally possible to predict *a priori* the extent to which a given advert within a video game will be viewed, and therefore the number of impressions experienced by the player. In order for the advertising revenue model to be applied to in-game advertising, the visibility of an advert may therefore be measured in real time as a video game is played.

The data gathered from measuring the visibility of an advert may be used to determine an advertising fee or to control the distribution of the advert. The data may also be used to inform the advertising entity, the game developer, or a third party, of the effectiveness of the advert. Various factors affect the degree to which an in-game advert is experienced by a player of the video game, including: the duration of time that the advert is on screen; the size of the advert in relation to the total size of the screen or viewport; and the proportion of an advert which is visible within the screen or viewport. The visibility of the advert depends on whether and how much the advert extends outside the viewport, and whether any portion of the advert is occluded by objects appearing in the scene with the advert.

A known method of determining whether an in-game advert is occluded by objects in a computer-generated scene is based on ray tracing or ray casting, in which algebraic ray equations are determined for rays emanating from a virtual camera in a direction towards one or more points on the advert, and then used to determine whether any intersections exist between the rays and objects (such as polygons) lying between the virtual camera and the one or more points on the advert. Any point for which at least one such intersection exists is determined to be occluded from the perspective of the virtual camera.

Although ray tracing methods may be convenient for certain types of video game (such as first-person shooting games in which ray tracing is already used to determine interactions between projectiles and objects within the game), there is no general requirement for a video game to provide ray tracing functionality for polygons corresponding to those rendered within the game environment, meaning that ray tracing solutions may lead to unreliable results and/or may require significant modifications to the video game code. For example, sports games with custom physics may not provide ray tracing functionality and therefore the video game code would have to be modified to enable such functionality and to provide polygons suitable for implementing such functionality. The implementation would then have to be audited to ensure reliability. Lack of reliability of the occlusion detection functionality may be unacceptable for applications in which advertising revenue or advert distribution is dependent on the results of the occlusion detection.

Ray tracing is computationally expensive and, whilst specialized processing units for ray tracing do exist for certain graphics processing applications (such as animated films), at the time of writing ray tracing is too slow for real-time rendering of entire scenes for most video games. Instead, real-time rendering of scenes is usually based on rasterization techniques, and therefore gaming devices include specialist hardware (graphics processing units) for accelerating such rasterization techniques.

### SUMMARY

According to a first aspect, there is provided a computer-implemented method, a data processing system and a computer program product according to the appended claims.

The provided method is of determining an extent to which an object in a computer-generated scene is visible when viewed from a perspective of a virtual camera. The method includes rendering the computer-generated scene from the perspective of the virtual camera, said rendering including storing, in a depth buffer, a depth map data corresponding to a depth map of at least part of the computer-generated scene and comprising respective depth map values for pixel locations spanning at least part of a field of view of the virtual camera. The method further includes: generating a plurality of points distributed substantially evenly over a surface of the object; determining, for each point of the plurality of points lying within said at least part of the field of view of the virtual camera, a respective pixel location and depth map value from the perspective of the virtual camera; determining whether each point of the plurality of points is visible from the perspective of the virtual camera based on a comparison between the depth map value determined for the point and a corresponding one or more of the depth map values stored in the depth buffer; and determining the extent to which the object is visible in dependence on which of the plurality of points are determined to be visible from the perspective of the virtual camera.

The use of depth buffer data for viewability testing after the rendering of a scene can result in improved computational efficiency compared with methods based on ray tracing, whilst advantageously ensuring that the results of the viewability testing reliably correspond to what is actually rendered on screen. The method is widely compatible with video games of any genre provided that rasterization-based rendering is utilized, enabling game developers or third parties to incorporate such functionality into video games with minimum alteration to their video game code.

The surface of the object may comprise at least part of each of a plurality of rendering polygons, and the method may include generating the plurality of points based on one or more test polygons which match or approximate the surface of the object. If the number of test polygons is less than the number of rendering polygons, the generating of the points will be performed more quickly and at a lower computational cost than if the rendering polygons were used directly, improving the responsiveness of the viewability testing procedure whilst also reducing processing demands, without having an adverse effect on graphics performance.

In examples, the rendering engine includes a GPU, and the depth buffer may be stored in video RAM of the GPU. The computer-implemented method described above may also be at least partially implemented within the GPU, for example using shader code. Utilizing the GPU for viewability testing enables the testing to be performed in a highly parallelized manner whilst reducing the processing load on the CPU of the host system.

Determining whether each point of the plurality of points is visible from the perspective of the virtual camera may include populating an input texture or input buffer with a respective test element located at each of the plurality of points, and processing the depth buffer and the input texture or input buffer using one or more shaders to populate an output texture or output buffer comprising a representation of how many of the test fragments indicate a lesser or equal distance from the virtual camera than the corresponding one or more depth map values stored in the depth buffer.

Alternatively, determining whether each point of the plurality of points is visible from the perspective of the virtual camera may be performed by a compute shader, if a compute shader is supported. In certain situations, using a compute shader may lead to a faster and more efficient viewability testing routine compared with other types of shader (such as a pixel shader) because compute shaders are able to operate independently of other parts of the graphics pipeline.

Determining the extent to which the object is visible in dependence on which of the plurality of points are determined to be visible from the perspective of the virtual camera may include performing synchronous or asynchronous readback from the video RAM of the GPU. The system may then be configured to schedule further rendering between determining whether the points are visible from the perspective of the virtual camera and performing the synchronous or asynchronous readback. In this way, it can be ensured that the depth testing is completed for all points before the readback is performed, reducing lag and improving the responsiveness of the method.

In cases where the scene is rendered in frames at a first frequency, the viewability testing may be performed for each rendered frame (for example with a readback delay of one or more frames), or may be configured to perform the viewability testing at a second frequency lower than the first frequency. In this way, the processing demands of the viewability testing may be reduced relative to the processing demands of the rendering.

The number of generated points may depend on the dimensions of the object as viewed from the perspective of the virtual camera. In this way, the viewability testing may be performed at a higher granularity for objects appearing larger on screen, reflecting the fact that changes in viewability of such objects will have a more pronounced impression on the user, whilst ensuring processing resources are not wastefully used determining the viewability of distant objects.

Determining whether each point of the plurality of points is visible from the perspective of the virtual camera may further be based on whether the point lies within a field of view of the virtual camera. For example, points lying outside the field of view of the camera, either due to being outside of the viewing frustum of the camera or having a depth map value indicating that the point is behind the camera, may be discarded prior to the depth buffer testing. In this way, parts of the object lying outside a viewing frustum of the virtual camera do not contribute to the measured viewability.

The plurality of points may contain fewer points than a number of pixels spanned by the surface when viewed from the perspective of the virtual camera. In this way, the processing demands of the viewability testing can be reduced, for example to a level which is insignificant compared with the processing demands of the scene rendering.

Prior to determining whether the points are visible from the perspective of the virtual camera, the method may include offsetting the plurality of points from the surface in a direction towards the virtual camera or otherwise in a substantially outward direction from the surface (e.g. in the direction of an exact/average normal to the surface). In this way, the depth buffer testing can be made robust against sampling errors caused by the finite size of pixels and/or discretization of the depth buffer, avoiding erroneous determinations of the object not being visible, for example where the surface of the object corresponds to at least a portion of one or more rendering primitives of the scene.

In examples where the points are offset from the surface, the offsetting may be by a distance that increases with distance of the point from the virtual camera, because the precision of the depth buffer may reduce with distance from the virtual camera, and therefore a greater degree of offsetting may be appropriate for greater distances from the virtual camera. Alternatively, or additionally, the viewability testing module may be prohibited from offsetting points to positions closer to the virtual camera than a near plane of the virtual camera. In this way, side effects in which points are moved into a region excluded by the field of view may be prevented. Such side effects may occur for example where the virtual camera is an orthographic camera and/or where information is presented in the foreground of the scene, for example as a user interface such as a heads-up display or dashboard. In such cases, a game developer may position objects in or very close to the near plane.

As an additional, or alternative, means of improving the robustness and accuracy of the depth buffer testing, the determining of whether a point is visible from the perspective of the virtual camera, for at least one of the plurality of points, may be based on a comparison between the determined depth map value for the point and an interpolated depth map value derived from a plurality of corresponding depth map values stored in the depth buffer.

Storing the depth map of the computer-generated scene may include: initializing the depth buffer to indicate, for each pixel location within said at least part of the field of view of the virtual camera, a maximum distance from the virtual camera representable by a depth map value; determining fragments of a set of rendering primitives of the computer-generated scene, each fragment having a pixel location within said at least part of the field of view of the virtual camera; for each determined fragment, determining a depth map value and, if the determined depth map value for the fragment indicates a lesser or equal distance from the virtual camera than a depth map value currently stored in the depth buffer at the pixel location of the fragment, overwriting said depth map value currently stored in the depth buffer with the determined depth map value for the fragment. The overwriting of the depth map value currently stored in the depth buffer may be dependent on the fragment having an alpha value greater than a predetermined threshold. When this is done, the viewability testing automatically takes account of the opacity of objects in the scene.

For each point of the plurality of points lying within said at least part of the field of view of the virtual camera, determining whether said point is visible from the perspective of the virtual camera may include performing an auxiliary rendering process for a test primitive having an associated primitive identifier and comprising one or more vertices positioned in accordance with said point. The auxiliary rendering process includes determining one or more fragments of the test primitive, and for each of the determined one or more fragments of the test primitive: performing a depth test, whereby to compare a depth map value of the fragment to a corresponding one or more depth map values stored in the depth buffer; and dependent on an outcome of the depth test, executing a pixel shader configured to write data to an element of a data buffer within memory of the GPU, the element and/or the data depending on the associated primitive identifier. Determining whether said point is visible from the perspective of the virtual camera is dependent on whether the pixel shader has written data to said element of the data buffer, and the pixel shader and/or a render state associated with the pixel shader is configured not to output any pixels to a rendering target of the rendering engine.

By performing the occlusion detection as an auxiliary rendering pass immediately after rendering the relevant part of the scene, the GPU may not be required to write (aka resolve) the depth buffer to the memory of the host device, and may instead perform the rendering and the viewability testing using a small, fast cache of memory directly accessible by the GPU, reducing latency introduced by the viewability testing process.

The pixel shader and/or the render state associated with the pixel shader may be further configured not to write data to the depth buffer. This ensures that the viewability testing does not create artefacts in the depth buffer that may affect subsequent processes (such as further rendering processes) which depend on the depth buffer.

The rendering may include dividing the field of view of the virtual camera into a plurality of tiles, in which case said at least part of the field of view of the virtual camera may correspond to one of the plurality of tiles. Using tiled rendering reduces the size of the depth buffer to enable the rendering to be performed without resolving the depth buffer to the memory of the host device. Performing the auxiliary rendering pass, or executing a compute shader, on a tile-by-tile basis along with the main rendering pass may therefore achieve the effect of reducing latency even when the size of the cache memory accessible by the GPU is limited. This may be of particular value for mobile gaming use cases.

The method may include generating, for each of a plurality of image frames in which the scene is rendered from the perspective of the virtual camera, a respective set of points distributed across the surface of the object, and determine the extent to which the object is visible in dependence on which points of the respective set of points are determined to be visible in each of the plurality of image frames. The positions of at least some of the generated points relative to the surface of the object may vary between the plurality of image frames. The positions of the points generated over the entirety of the plurality of image frames may be substantially evenly distributed across the surface of the object.

The extent to which the object is determined to be visible may be referred to as a viewability estimate. Varying the positions of the points between image frames and using the determination of which points are visible from multiple frames mitigates the dependence of the viewability estimate result on the point position and any loss of accuracy in the presence of one or more fine-scale occluding objects, particularly when the apparent motion of the occluding object(s) relative to the surface is negligible. The robustness of the viewability test is thereby improved. Varying the positions of the points may also reduce the number of points needed in each image frame to achieve a viewability estimate of comparable accuracy, thereby reducing computational cost.

The positions of at least some of the generated points relative to the surface of the object vary between image frames in dependence on outputs of a random, pseudorandom, or quasi-random number generator. Randomizing the point positions in this way (rather than varying the point positions according to a simple pattern) makes it less likely for the variation of point positions to correlate with the apparent movement of an occluding object relative to the surface of the object being tested, which could otherwise mitigate the improvement in robustness.

The positions of the points generated over the entirety of the plurality of image frames may be substantially evenly distributed across the surface of the object. In such cases, for a large enough number of image frames, the viewability estimate will tend towards the exact result (i.e. a value that would result from the number of points being as high as the number of pixels spanned by the object surface when viewed from the virtual camera).

Further features and advantages of the invention will become apparent from the following description of preferred embodiments of the invention, given by way of example only, which is made with reference to the accompanying drawings.

### BRIEF DESCRIPTION OF THE DRAWINGS

Figure 1 schematically shows functional components of a system in accordance with examples.
Figure 2 schematically shows hardware and software components of a gaming device in accordance with examples.
Figure 3 is a flow diagram representing an occlusion detection method in accordance with examples.
Figure 4 shows an example of a computer-generated scene rendered from a perspective of a virtual camera.
Figure 5 shows a plan view of the computer-generated scene and virtual camera of Figure 4.
Figure 6 illustrates an example of an occlusion detection method applied to the computer-generated scene of Figure 4.
Figure 7 is a flow diagram representing a method of performing a depth test in accordance with examples.

### DETAILED DESCRIPTION OF CERTAIN INVENTIVE EMBODIMENTS

Details of systems and methods according to examples will become apparent from the following description with reference to the figures. In this description, for the purposes of explanation, numerous specific details of certain examples are set forth. Reference in the specification to 'an example' or similar language means that a feature, structure, or characteristic described in connection with the example is included in at least that one example but not necessarily in other examples. It should be further notes that certain examples are described schematically with certain features omitted and/or necessarily simplified for the ease of explanation and understanding of the concepts underlying the examples.

Embodiments of the present disclosure relate to determining an extent to which an object is visible from a perspective of a virtual camera within a computer-generated environment such as a video game environment. In particular, embodiments described herein address the above-mentioned issues associated with ray tracing approaches, whilst advantageously making use of data generated during a rasterization-based rendering process and, in some embodiments, harnessing graphics processing hardware that is ubiquitous in modern gaming devices.

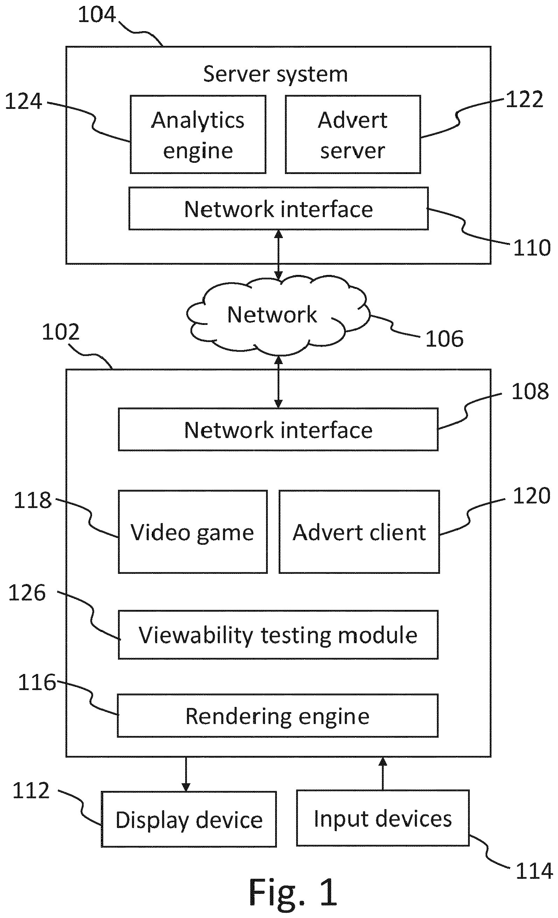

Fig. 1 schematically shows functional components of a gaming device 102 and a server system 104 arranged to communicate over a network 106 using respective network interfaces 108, 110. The various functional components shown in Figure 1 may be implemented using software, hardware, or a combination of both as will be explained in more detail hereinafter. The gaming device 102 can be any electronic device capable of processing video game code to output a video signal to a display device 112 in dependence on user input received from one or more input devices 114. The video signal typically includes a computer-generated scene rendered in real time by a rendering engine 116, for example using rasterization-based rendering techniques and/or ray tracing techniques. The gaming device 102 may for example be a personal computer (PC), a laptop computer, a tablet computer, a smartphone, a games console, a smart tv, a virtual/augmented reality headset with integrated computing hardware, or a server system arranged to provide cloud-based gaming services to remote users. It will be appreciated that the gaming device 102 may include additional components not shown in Fig. 1, for example additional output devices such as audio devices and/or haptic feedback devices.

The server system 104 may be a standalone server or may be a networked system of servers, and in this example is operated by a commercial entity responsible for managing the distribution of adverts to end users (gamers) on behalf of advertisers, though in other examples an equivalent or similar system may be operated directly by an advertiser.

The gaming device 102 may be arranged to store a video game 118 locally, for example after downloading the video game 118 over the network 106, or may be arranged to read the video game 118 from a removable storage device such as an optical disc or removable flash drive. The video game 118 may be purchased by a user of the gaming device 102 from a commercial entity such as a games developer, license holder or other entity, or may be obtained for free, via a subscription model, or in accordance with any other suitable revenue model. In any of these cases, the commercial entity may obtain additional revenue by selling advertising space within the video game 118 to advertising entities, either directly or via a third party. For example, a video game developer may allocate particular objects, surfaces, or other regions of a scene within the video game 118 as advertising space, such that advertisements appear within said regions when the scene is rendered during gameplay.

The rendered advertisements may be static images or videos and may be dynamically updated as the user plays the video game 118, for example in response to certain events or certain criteria being satisfied. Furthermore, the rendered advertisements may be updated over time, for example to ensure that the rendered advertisements correspond to active advertising campaigns, and/or in dependence on licensing agreements between commercial entities. The advertisements for rendering are managed at the gaming device 102 by an advert client 120, which communicates with an advert server 122 at the server system 104. For example, the advert server 122 may transmit advert data to the advert client 120 periodically or in response to predetermined events at the gaming device 102 or the server system 104.

In addition to the advert server 122, the server system 104 includes an analytics engine 124 configured to process impression data received from the gaming device 102 and other gaming devices registered with the server system 104. The impression data may include, *inter alia,* information regarding how long, and to what extent, an advertisement is visible to users of the gaming devices. The impression data may include information at various levels of detail, for example a simple count of advertising impressions as determined in accordance with a given metric, or more detailed information such as how long a given advertisement is visible to a user during a session, the average on-screen size of the advertisement during that time, and the proportion of the advertisement that is visible during that time.

The analytics engine may process the impression data for a variety of purposes, for example to match a number of advertising impressions with a number agreed between the distributing party and the advertiser, to trigger the advert server 122 and/or the advert client 120 to update an advert appearing within the video game 118, or to determine a renumeration amount to be paid by the advertiser. It will be appreciated that other uses of impression data are possible, though a detailed discussion of such uses is outside the scope of the present disclosure.

In order to generate impression data for processing by the analytics engine 124, the gaming device 102 includes a viewability testing module 126. The viewability testing module 126 is responsible for determining the extent to which an advertisement located within a scene is visible when the scene is rendered by the rendering engine 116 from a perspective of a virtual camera. In particular, the viewability testing module 126 is responsible for detecting when an advert appearing within a rendered scene is occluded by other objects in the scene. In accordance with the present disclosure, the viewability testing module 126 is arranged to utilize data generated by the rendering engine 116 during the rendering of scenes. It should be noted that, whilst the viewability testing module 126 is shown separately from the video game 118 in Fig. 1, the functionality of the viewability testing module 126 may in fact be defined within the video game 118, for example as code written by the game developer or provided by the operator of the server system 104 to the game developer as part of a software development kit (SDK).

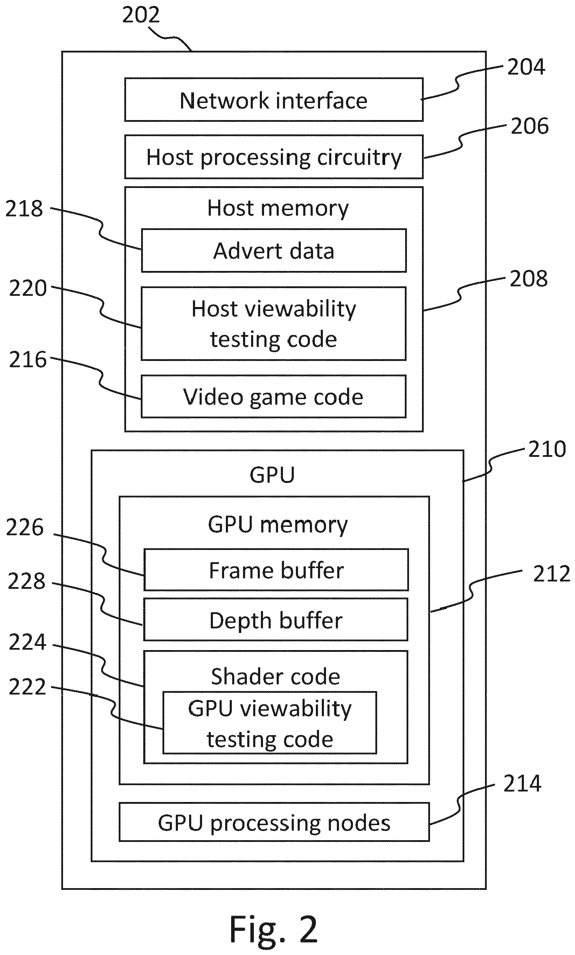

Fig. 2 is a schematic block diagram representing an example of a gaming device 202 with software/hardware components arranged to implement the functionality of the gaming device 102 described above. In particular, Fig. 2 shows components of the gaming device 202 that are relevant to the rendering of scenes within a video game, and to viewability testing. The gaming device 102 in this example advantageously utilizes graphics processing hardware to improve the reliability and efficiency of the viewability testing process. The gaming device 202 includes a network interface 204 for communicating with a server system (not shown), along with processing circuitry and memory, referred to hereinafter as host processing circuitry 206 and host memory circuitry 208 to distinguish from graphics processing hardware, which in this example includes a GPU 210. The host processing circuitry 206 includes a CPU, and may optionally include one or more other processing units, application specific integrated circuits (ASICs), gate arrays and so on. The gaming device 202 may also include further specialist processing units not shown in Fig. 2, such as a digital signal processor (DSP) or neural processing unit (NPU).

The host memory 208 includes volatile random-access memory (RAM) including static random-access memory (SRAM) and dynamic random-access memory (DRAM), as well as non-volatile storage such as a solid-state drive (SSD), flash memory and/or a hard disk drive (HDD).

The gaming device 202 features discrete graphics and therefore the GPU 210 is a component of a removable graphics card that further includes dedicated GPU memory 212, also referred to as video random-access memory (VRAM), arranged to be accessed rapidly by processing cores 214 of the GPU 210. In other examples, a gaming device may feature integrated graphics, in which case a GPU shares system memory with other processors such as a host CPU.

The host memory 208 stores video game code 216 encompassing all aspects of a video game, including scene information, graphics and rendering information, a physics engine, game modes, and so on. The video game code 216 may be based upon a game engine such as the Unity engine or the Unreal engine. The host memory 208 further stores advert data 218 which includes image and/or video data corresponding to advertisements to be presented to the user of the gaming device 202, along with data associating these advertisements with objects, surfaces, or other regions of scenes within the video game. The host memory 208 further stores host viewability testing code 220, which in this example works in conjunction with GPU viewability testing code 222 stored in the GPU memory 212 to perform the viewability testing functionality, as will be described in more detail hereinafter.

The GPU viewability testing code 222 in this example is a subset of shader code 224, which also performs other functions implemented on the GPU 210, including those involved in the rendering of computer-generated scenes. The shader code 224 consists of several shaders, which are individual programs configured to be executed by the processing resources of the GPU 210. Examples of shaders include vertex shaders and pixel shaders (aka fragment shaders) which, when executed by the GPU 210, perform data processing operations in order to implement respective stages of the graphics rendering pipeline. Pixel shaders and vertex shaders act on particular features of the data defining the scene for rendering (vertex data in the case of vertex shaders and fragment/pixel data in the case of pixel shaders) and are executed by the GPU 210 at predetermined instances in accordance with the nature of the respective rendering stage. Pixel shaders and vertex shaders (along with, optionally, other specific types of shader) thereby provide a well-defined framework for implementing the graphics rendering pipeline, for which modern GPU hardware is optimized (for example by ordering and batching the processing workload conveniently in dependence on vertex/pixel location). As described earlier in this disclosure, embodiments can alternatively utilize a compute shader, which is a shader that is able to retrieve and operate on arbitrary data stored in GPU memory (e.g. textures, buffers, etc.), and can be executed substantially independently of any graphics rendering pipeline. Compute shaders have been developed to increase the flexibility of GPUs, for example to perform general data processing.

The GPU memory 212 further includes various buffers for temporarily storing data generated during the rendering process, including a frame buffer 226 and a depth buffer 228. The frame buffer 226 is used to store pixel data to be transmitted to a display device. The primary function of the depth buffer 228 is to ensure that fragments of objects hidden behind other objects in the scene do not make it to the frame buffer 226 for rendering (thereby solving the so-called hidden surface problem). When a scene is rendered from a perspective of a virtual camera, the depth buffer 228 is configured to associate depth map values with pixel locations spanning a field of view of the virtual camera. Depth map values are indicative of distances from the virtual camera to objects in the scene, for example in the axial direction of the virtual camera or in a direction of a ray directly from the virtual camera to the object, and may vary linearly, logarithmically, or any other suitable increasing or decreasing function of the axial distance.

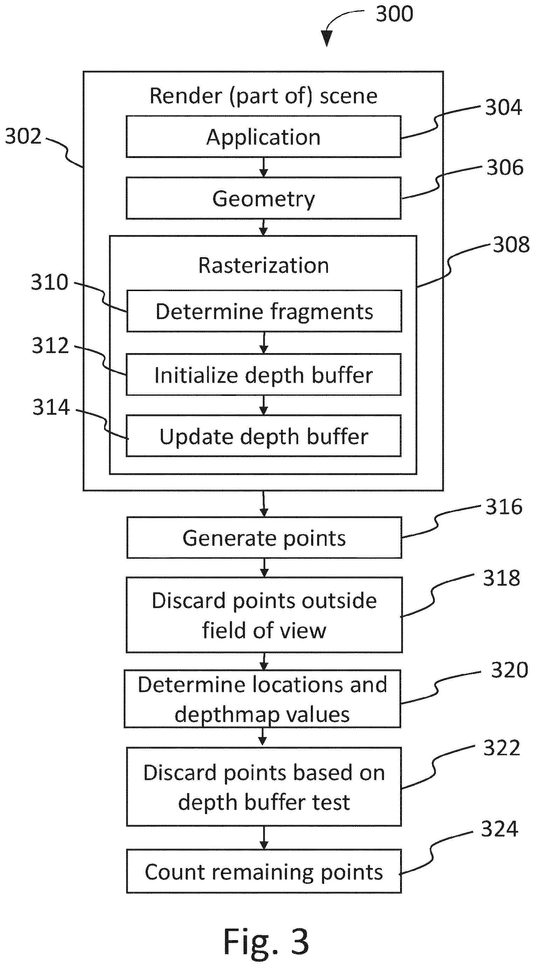

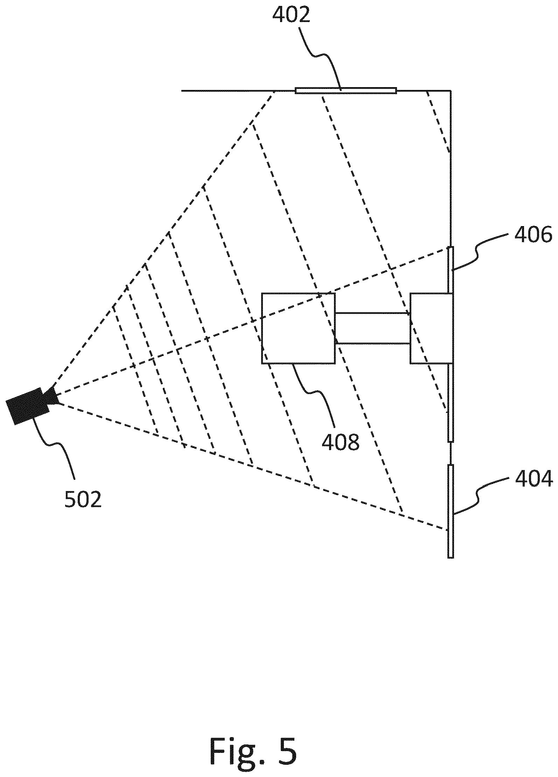

In this example, the depth buffer 228 is an integer Z-buffer, which has an equivalent data structure to that of a monochromatic image in which every element corresponds to a pixel location and is associated with an integer depth map value. Each possible integer corresponds to a range of axial distances from the virtual camera, between a user-defined minimum value (near plane) and maximum value (far plane). In other examples, a far plane may not be user defined but instead may correspond to a maximum or minimum integer representable in the relevant number format. In other examples still, only a subset of the depth map values representable using the number format correspond to possible distances from the camera. The depth map values may be stored in 8-bit, 16-bit, 24-bit, 32-bit, or any other suitable integer format, where larger bit sizes allow for more precise rendering of scenes containing closely spaced objects. Alternatively, a Z-buffer may use a floating-point number representation, leading to greater dynamic range and therefore favorable precision distribution throughout the depth range, but higher memory and processing demands. In the case of an integer Z-buffer, the distances corresponding to the integer values are grouped more densely close to the near plane, and more sparsely farther away, resulting in better precision closer to the virtual camera (see for example Fig. 5, in which the dashed lines perpendicular to the axis of the virtual camera 502 delimit the ranges covered by adjacent integer values). Other types of depth buffer, such as a W-buffer, may allow for more evenly distributed precision of the depth map values. The use of the depth buffer in the rendering of a scene and for viewability testing in accordance with the present disclosure is described hereafter with reference to Fig. 3.

Fig. 3 shows an example of a method 300 performed by the gaming device 202 for determining an extent to which an object in a computer-generated scene is visible when viewed from a perspective of a virtual camera. The method includes rendering, at 302, at least part of the computer-generated scene corresponding to at least part of a field of view of the virtual camera. As is common for real-time rendering of scenes within video games, the rendering process is based on a graphics pipeline including an application stage 304, a geometry stage 306, and a rasterization stage 308. In this example, the application stage 304 is performed by the host processing circuitry 206 (specifically the CPU) in accordance with rendering information forming part of the video game code 216 stored in the host memory 208, whereas the geometry stage 306 and the rasterization stage 308 are performed by the GPU 210 in accordance with shader code 224 stored in the GPU memory 212. Although these steps are shown in series for simplicity, it will be appreciated that these stages, and processing routines executed within these stages, may be performed in parallel to one another. Furthermore, the stages described herein may be modified, added to, or replaced, depending on the implementation of the graphics pipeline. In particular, tiled rendering may be used in which the field of view of the virtual camera is divided into tiles, and at least part of the rendering 302 is performed separately for each of the tiles. This reduces the size of the depth buffer, which enables the rendering of the scene to be performed without resolving the depth buffer to the main memory in cases where the amount of fast memory accessible to the GPU 210 is small, for example in mobile gaming use cases.

During the application stage 304, a set of rendering primitives is obtained for a set of models forming the scene, in accordance with the video game code 216 stored in the host memory 208. The rendering primitives generally include points, lines, and polygons such as triangles, which collectively represent objects. Each polygon may have an outward facing side corresponding to an outer surface of the object represented by the polygon, where the outer facing side is typically implied from a vertex winding order during rasterization, as opposed to being stored independently in data.

During the geometry stage 306, co-ordinates of the primitives are transformed from "model" space to "world" space to "view space" to "clip" space, in dependence on a position and orientation (pose) of the models in the scene, and a pose of the virtual camera. This may be performed using a single matrix. Some primitives may be discarded or clipped, for example primitives falling completely or partially outside the field of view of the virtual camera or outside a predetermined guard band extending beyond the field of view of the virtual camera, along with optionally any facing away from the virtual camera, after which the coordinates of surviving primitives are scaled to "normalized device co-ordinates (NDC)" such that the NDC values for primitives (or portions of primitives) to be displayed within the viewport fall within a predetermined range (usually [-1;1]). Furthermore, depth bias may be introduced to certain polygons to ensure that coplanar polygons (for example representing a surface and a shadow on the surface) are rendered correctly and independently of the rendering order. The resulting output is then scaled to match the size of the viewport in which the scene is to be rendered. The viewport may correspond to the entire display of a display device, or may correspond to only a portion of a display device for example in the case of split-screen multiplayer, a viewport presented within a decorated frame, or a virtual screen within the computer-generated scene.

During the rasterization stage 308, discrete fragments are determined at 310 from the rendering primitives, where the size and position of each fragment corresponds to a respective pixel of the frame buffer/viewport. If tiled rendering is used, the position of each fragment corresponds to a respective pixel of the current tile. The depth buffer 228 is used for determining which fragments are to be written as pixels to the frame buffer 226, and at least the fragments to be written to the frame buffer 226 are colored using texture mapping techniques in accordance with one or more pixel shaders. To avoid redundant processing, some video games use a separate initial rendering pass that writes only to the depth buffer 228, then perform further rasterization steps in a subsequent rendering pass, filtered by the populated depth buffer 228. Lighting effects may also be applied to the fragments.

The depth buffer 228 is initialized, at 312, to indicate a maximum distance from the virtual camera for each pixel location within the field of view of the virtual camera (or part of the field of view if tiled rendering is used). In the present example, the depth buffer 228 is a Z-buffer and each element of the Z-buffer is initialized to an integer value indicating a maximum distance from the virtual camera. The GPU then updates the Z-buffer at 314. For each fragment determined at 310, a depth map value is determined and, if the depth map value for the fragment indicates a lesser or equal distance from the virtual camera than a depth map value currently stored in the depth buffer at the pixel location of the fragment, the fragment may proceed to the frame buffer 226 and the depth map value currently stored in the depth buffer is overwritten with the determined depth map value for the fragment. Additional logic may be applied to determine whether a given fragment causes an update of the Z-buffer. In particular, fragments having an alpha value (opacity) below a threshold value may not cause the Z-buffer to be updated.

When the above process has been performed for each fragment determined at 310, the depth buffer 228 contains a depth map of the scene, or part of the scene, to be rendered, the depth map comprising depth map values of fragments to be written to the frame buffer 226. In some examples, further rendering steps such as alpha testing and antialiasing are applied before the fragments are written to the frame buffer 226 and screen thereafter.

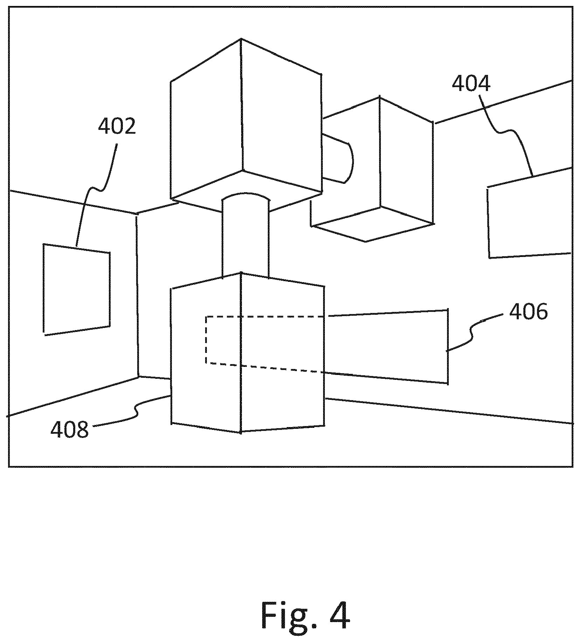

Fig. 4 shows a view of a computer-generated scene rendered in accordance with the rendering process described above. The scene includes three rectangular advert surfaces 402, 404, 406. In this example, each of the advert surfaces 402, 404, 406 corresponds to a single advertisement mapped to a quadrilateral region of the scene mesh using texture mapping techniques. Each advertisement may be mapped to a region covering at least part of a single polygon or several polygons, for example where the advertisement is to be positioned on a substantially curved or otherwise non-flat surface. Fig. 5 shows a plan view of the scene of Fig. 4, including a virtual camera 502 from which the scene is viewed in Fig. 4, and dashed lines perpendicular to the axis of the virtual camera 502 representing discrete depth map values from the virtual camera 502.

The advert surface 402 is fully visible from the perspective of the virtual camera 502, because the entire advert surface 402 lies within the viewing frustum of the virtual camera 502 and is not occluded by any objects in the scene. The advert surface 404 is only partially visible from the perspective of the virtual camera 502, because part of the surface 404 lies outside the viewing frustum of the virtual camera 502. The advert surface 406 is only partially visible from the perspective of the virtual camera, because part of the advert surface 406 is occluded by an object 408 (the occluded part of the advert surface 406 is shown in Figure 3 using dashed lines, but does not appear in the rendering of the scene). The methods described hereafter provide a convenient and computationally efficient means of determining the proportions of the advert surfaces 402, 404, 406 that are visible within any rendered view of the scene.

Returning to Fig. 3, the method 300 continues with generating, at 316, a set of points distributed substantially evenly across a surface of the object of interest. The surface may be formed of one or more rendering polygons, and the points may be generated directly from the one or more rendering polygons. Alternatively, and advantageously, the points may be generated across one or more test polygons which match or approximate the one or more rendering polygons (where matching is possible for coplanar rendering polygons, and approximating is possible for approximately coplanar rendering polygons, for example rendering polygons modelling a rough or uneven surface which fluctuates about a plane). The test polygons may be provided as part of the video game code 216, or alternatively may be generated automatically by the gaming device 202, e.g. during loading of the scene, based on an algorithm which averages or otherwise takes into account the orientations of the relevant rendering polygons, and optionally texture coordinates for the surface in the case that the surface does not completely cover the rendering polygons (this may be useful when the polygons of the scene cannot be predetermined, such as may be the case for a procedural mesh). If the number of test polygons is less than the number of connected polygons, the generating of the points will be performed more quickly and at a lower computational cost than if the rendering polygons were used directly, improving the responsiveness of the viewability testing procedure whilst also reducing processing demands, without having an adverse effect on graphics performance. It is noted that, whilst in Fig. 3 the generating of points is shown after the rendering of the scene, in examples the set of points may be generated in parallel with the rendering of the scene, for example using the host processing circuitry 206 whilst the GPU 210 performs the geometry stage 306 and rasterization stage 308 of the rendering 302. Generating the set of points may involve determining world co-ordinates of each point, given a set of world co-ordinates associated with the surface of the object (such as co-ordinates of its vertices) or a matrix representing a transformation from a default surface to the position and orientation of the surface in world space.

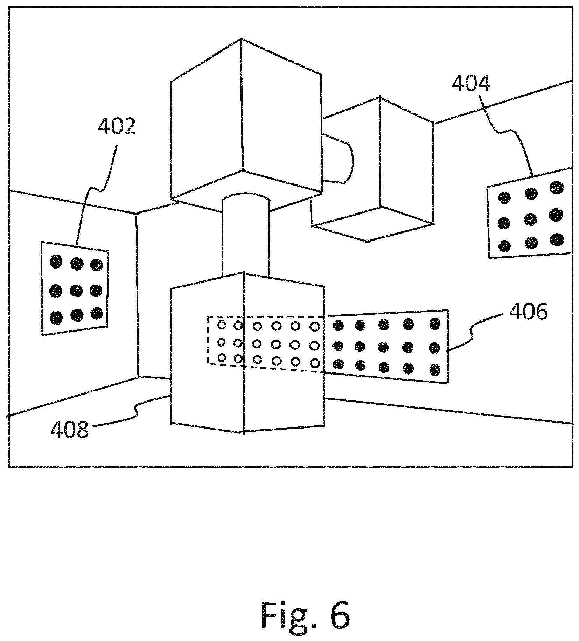

The generated points may be distributed uniformly across the surface, for example on a regular grid, or may be distributed nonuniformly, for example using random sampling, Poisson disk sampling, or an irregular grid for example having periodic offsets between rows or columns. Even if the points are nonuniformly distributed, in order for accurate measuring of the visibility of the surface, it is desirable that the points are distributed substantially evenly across the surface, meaning that the average density of points does not vary significantly across the surface. The set of points may be arranged to extend to the edges of the surface or alternatively may extend only partway to the edges of the surface. Fig. 6 shows an example in which a set of points has been generated for each of the advert surfaces 402, 404, 406 of Fig. 4. The points (represented by filled and empty circles) are uniformly distributed across the advert surfaces 402, 404, 406, with the outermost points inset from the edges of the advert surfaces 402, 404, 406.

Advantageously, the number of generated points can be less than the number of pixels spanned by the surface when viewed from the perspective of the virtual camera, or in other words less than the number of pixels of the viewport occupied by the rendered surface. This may result in a relatively low computational cost of the visibility testing process in comparison with the various rendering processes. However, the number of points should be high enough to give sufficient resolution for viewability testing. The number of points may depend on the on-screen dimensions of the surface when rendered from the perspective of the virtual camera. For example, the points may be arranged on a regular grid with the number of grid lines in each direction being scaled in accordance with a corresponding edge width of the surface when viewed from the perspective of the virtual camera.

In an example in which the surface is a quadrilateral, the points may be generated using the following algorithm (written in pseudocode, which is to be understood to be illustrative and not prescriptive):

```
  vector3lerp(a: vector3, b: vector3, t: scalar) = a + (b - a) * t
  p00, p10, p01, p11 = the four corners of the quadrilateral
  for x in [0; count_x)
   {
      for y in [0; count y)
      {
             fx = (x + 0.5) / count_x
             fy = (y + 0.5) / count y
             point = vector3lerp(
                     vector3lerp(p00, p10, fx),
                     vector3lerp(p01, p11, fx), fy)
      }
   }
```

The values count x and count_y above represent the number of columns and rows of points respectively and can be scaled in accordance with the edge width of the quadrilateral when viewed from the perspective of the virtual camera. Alternatively, the quadrilateral may be defined by the application of a surface-world transformation matrix T to a default square [-1;1]², in which case the points are given by T*[2*fx - 1, 2*fy-1, 0].

Having generated the set of points, the method 300 continues with discarding, at 318, those which lie outside the field of view of the virtual camera. Typically, this involves discarding points that lie behind the camera or behind a predetermined near plane, and discarding points which lie outside the viewing frustum of the virtual camera. Furthermore, points corresponding to any surface for which predetermined viewability criteria are not satisfied may be discarded. Examples of viewability criteria include more than a predetermined proportion of the surface (such as 30%, 50%, or 70%) lying within the field of view of the virtual camera, the surface having a projected area greater than a predetermined proportion of the viewport area (such as 1%, 2%, or 5%), or an angle between the outward-facing normal vector of the surface and an axial direction towards the camera being greater than a predetermined angle (such as 45°, 60° or 75°). Points corresponding to advert surfaces facing away from the user may be automatically discarded in this way. As an alternative to discarding/rejecting points lying outside the field of view of the virtual camera, the surface of interest may be clipped before the generating of the set of points, such that all of the points in the set lie within the field of view of the virtual camera.

Having clipped the set of points, the method 300 continues with determining, at 320, a respective location and depth map value for each remaining point in the set from the perspective of the virtual camera. In one example the co-ordinates of the points are transformed from world space to NDC space. The determined depth map values may be stored in a fixed-point or floating-point number format. The determining may be performed by the host processing circuitry 206 while the GPU 210 performs the scene rendering 302, or alternatively may be performed by the GPU 210 using shader code. Using the GPU 210 enables the transformation to be performed in a highly parallelized manner and reduces the processing load on the host processing circuitry 206.

At 322, the depth map values of the remaining points in the set are compared with a corresponding one or more depth map values stored in the depth buffer 228. If the location of the point does not correspond exactly to a center of one of the elements of the depth buffer, then the depth value of the nearest element of the depth buffer may be used, or alternatively the depth values stored in the depth buffer 228 may be interpolated. Using interpolated depth values may improve the accuracy of the depth comparison and mitigate the effect of sampling errors caused by the finite size of pixels, whereby a depth map value of a point may otherwise be compared with a depth map value of a pixel at a slightly offset position from the point, potentially leading to an erroneous outcome of the depth test. Furthermore, the depth buffer 228 may be downscaled before the comparison is performed. Points for which the determined depth map value indicates a greater distance from the virtual camera than the corresponding value(s) in the depth buffer 228 are discarded. In this way, the stored depth map of the scene, which is already generated during the scene rendering 302, is reused for the purpose of viewability testing. The use of depth buffer data in this way advantageously ensures that the results of the viewability testing reliably correspond to what is actually rendered on screen. In cases where the Z-buffer is configured with additional logic, for example to exclude fragments with alpha values below a threshold value, the depth map comparison at 322 will automatically take this logic into account with no modifications or additional processing.

In some cases, a surface of interest may correspond to at least part of one or more polygons within a computer-generated scene (for example, an advert will typically be painted onto an object in the scene). In this case, sampling errors caused by the finite size of the pixels as described above and/or errors caused by the discretization of depth map values in the depth buffer 228 may result in the surface being incorrectly determined to be occluded when the surface is in fact visible from the perspective of the virtual camera. In order to avoid this, the depth map values of the points may be offset slightly in a direction towards the virtual camera, or alternatively in a substantially outward direction with respect to the surface (for example, parallel or approximately parallel to the outward-facing normal). In this way, points lying within a surface corresponding to one or more rendering primitives in the scene will not be discarded based on a comparison with depth map values associated with said primitives. In cases where the points are generated across one or more test polygons that match or approximate a set of rendering polygons, the offsetting of the points may be achieved by offsetting the test polygons from the rendering polygons before the points are generated at 316.

In cases where the points are generated across one or more test polygons that match or approximate a surface formed of set of rendering polygons, the offsetting of the points away from the surface may be achieved by offsetting the test polygons from the rendering polygons before the points are generated, or alternatively the offsetting may be performed as part of the process of generating the points. The offsetting may vary in dependence on the distance of the points and/or the surface from the virtual camera. For example, points more distant from the virtual camera may be offset by a greater amount than points closer to the virtual camera, reflecting the observation that depth map values may have a higher absolute precision closer to the camera (e.g. resulting from floating point numbers being used in the depth buffer and/or or resulting from range remapping and quantization of depth values). The degree of offsetting may for example be proportional to the distance of the point from the near plane. The exact dependence may vary depending on the type of depth buffer used in a particular video game (for example, integer vs floating point depth buffer).

A possible side effect of the offsetting of points away from a surface being tested is that if the surface is in or very close to the near plane, the points may be moved closer to the camera than the near plane of the virtual camera. The field of view is typically defined as being a region between the near plane and the far plane of the camera, and not lying outside of the edges of the viewport. By offsetting points such that the offset points are closer to the camera than the near plane, the points may be determined erroneously not to be visible from the perspective of the virtual camera. An example of a situation in which a game developer may position objects very close to the near plane is when information is presented in the foreground of the scene, for example as part of a user interface such as a heads-up display or dashboard. Such foreground objects may be two-dimensional or have two-dimensional portions, and it may be desirable to place such objects as close to the near plane as possible to ensure the objects are never occluded by other objects which are intended to be behind the foreground objects. Another situation where a developer may place an object in or very close to a near plane is when the virtual camera is an orthographic camera. In this case, the size of an object is independent of its distance from the camera so there is freedom for the developer to choose the distances to objects/layers, and it is common for the developer to place the nearest objects/layers in or very near to the near plane.

To mitigate the effects described above, the points may be prohibited from being offset to positions closer to the virtual camera than the near plane. For example, if the near plane defines z=0 in the depth direction in clip space (as would typically be the case for rendering as implemented in Direct3D), the z-component of each test point undergoes the operation max(z,0) → z, so that a test point with a negative z value (i.e. a test point closer to the camera than the near plane) is moved to z=0, (i.e. into the near plane). Similarly, if the near plane defines z=w in the depth direction in clip space (as would typically be the case for reverse-z rendering), the z-component of each test point undergoes the operation min(z,w) → z.

The depth map comparison at 322 may be performed by the GPU 210, for example using shader code 224, enabling a high degree of parallelization across the points. For example, an input texture or input buffer may first be populated with test elements at an appropriate resolution. The test elements may indicate respective depth map values for the set of points and associated sampling co-ordinates (or values from which the sampling co-ordinates can be derived), which enable comparisons with the depth map values stored in the depth buffer 228. A custom graphics pipeline may then be configured using shader code to compare the input texture or input buffer with the depth buffer 228 to populate either an output pixel or output texture comprising a representation of how many of the test elements indicate a lesser or equal distance from the virtual camera that a corresponding depth map value or values stored in the depth buffer 228. With regards to an output texture, this may for example be a binary output texture of the same resolution as the input texture, with elements indicating whether the depth map value of each test element indicates a lesser or equal distance from the virtual camera than a corresponding depth map value currently stored in the depth buffer 228. Alternatively, an output texture or output buffer may be configured to have an offset value, pixel value, or other value which counts the number of test elements passing or failing the depth test. This may be implemented within the custom graphics pipeline by configuring the primitive vertices appropriately and utilizing an additive blend mode to accumulate the depth test outputs for each test element.

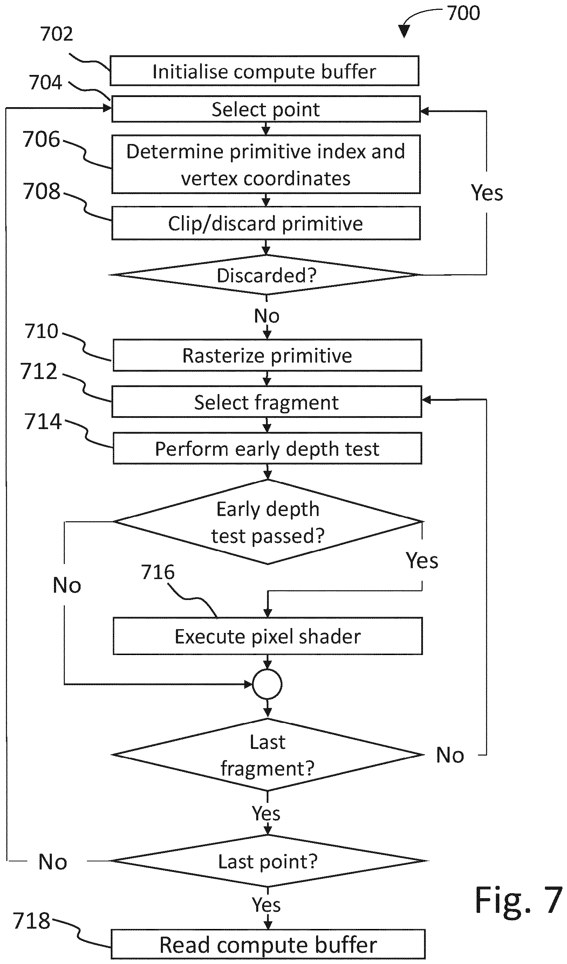

Fig. 7 shows a further example of a method 700 of performing the depth map comparison at 322. It is noted that the method 700 automatically performs the discarding of points and any transformations necessary to represent the points in an appropriate space for depth testing, making steps 318 and 320 of the method 300 redundant. The method 700 is implemented as an auxiliary rendering process performed by the GPU 210 in addition to the main rendering process in which the scene is rendered from the perspective of the virtual camera. The auxiliary rendering process is typically (though not necessarily) performed using the same hardware as the main rendering process. It is noted that although the method 700 is shown as a sequence of steps with two nested loops (an outer loop and an inner loop), it should be understood that both loops would typically be parallelized across processing resources within the GPU 210.

The method begins with initializing, at 702, a compute buffer within the on-board memory of the GPU 210. A compute buffer is a memory buffer for passing arbitrary data to and/or from shaders. Compute buffers can be read-only or read-write buffers, but for the present method the depth buffer must be a read-write buffer. In DirectX High-Level Shader Language (HLSL), a compute buffer is equivalent to an RWStructuredBuffer. In an exemplary configuration, a compute buffer is initialized with N integer or binary elements (indexed 0 to N-1), where N is the number of points generated across the surface of the object of interest, though other configurations are possible in which the compute buffer is not an integer or binary buffer and/or has more than N elements. For simplicity and efficiency of subsequent processing, the elements of the compute buffer may be initialized to zero, though it is equally possible for the elements of the compute buffer to be initialized with non-zero values.

For each point generated across the surface of the object of interest, the method 700 proceeds with selecting, at 704, one of the points and determining, at 706, a primitive identifier and coordinates of at least one vertex of a test primitive corresponding to the selected point. The test primitive may be any suitable primitive, such as a triangle, quad, line or point primitive. A point primitive is defined by a single vertex, whereas other types of primitive are defined by more than one vertex, in which case the positions of all of the vertices are determined in relation to the position of the selected point (for example, one of the vertices may have an identical world space position to the selected point, or the vertices may be located around the selected point). As will be explained in more detail hereafter, the visibility of the test primitive will be used as a proxy for the visibility of the selected point. Accordingly, the test primitive is typically small, of the order of no more than a few pixels/fragments, though larger test primitives may also be used, resulting in an increased chance of the test point being determined to be visible, for example where a surface is partially obstructed by very thin or small objects (having one or more dimensions of no more than a few pixels), and/or where a surface is oblique to the camera axis. The test primitive may be screen-aligned (i.e. having a normal vector parallel to the axis of the camera) or may be parallel to the surface to better represent the geometry of the object. In a particular example, a point primitive may be converted to a point sprite, which is a small screen-aligned primitive defined by a single vertex. The coordinates of the vertex/vertices may be determined in any of the coordinate systems discussed above, including world space, view space, clip space, or NDC space. A transformation matrix may be applied at 706 to transform the coordinates of the vertex/vertices (or equivalently the point from which the vertex/vertices are derived) from world space to the required space.

The primitive identifier is a numerical identifier (which may have one or more numerical components) that enables a given test primitive to be distinguished from other test primitives. The primitive identifier may for example have a single integer index running from 0 to N-1, where N is the number of points generated at 322. The primitive identifier may be encoded in any suitable way, for example using a dedicated function of a rendering API, such as gl_PrimitiveID for OpenGL and related APIs, or equivalently gl_VertexID/3 (performed as an integer division) for a triangular test primitive. Alternatively, one or both components of the UV texture coordinates for the vertex may be used to store or encode the primitive identifier. In a specific example in which the method 700 is implemented for the Unity game engine, four-dimensional clip space coordinates (x,y,z,w) are determined and stored with the primitive identifier as follows: position.xyz = xyz, uv.x = w, uv.y = primitive identifier.

The method 700 proceeds with clipping or discarding, at 708, the test primitive if the test primitive falls completely or partially outside the field of view of the virtual camera or outside a predetermined guard band extending beyond the field of view of the virtual camera. If the coordinates of the test primitive vertex are determined in a space other than clip space at 706, then the coordinates may be transformed to clip space prior to the clipping or discarding at 708. It is noted that in some implementations points may be discarded before the method 700 is carried out, in which case the clipping or discarding at 708 will have no effect. If the entire test polygon is discarded, then the method 700 returns to 704 and another point is selected.

Assuming the test primitive is not discarded, the method 700 proceeds with rasterizing, at 708, the test primitive to determine one or more fragments of the test primitive. Each determined fragment corresponds to a pixel location of the render target and has an associated depth map value. The rasterizing may include transforming the coordinates of the vertex or vertices of the primitive from clip space to NDC space and then scaling to match the rendering target to which the scene is rendered at 302, prior to determining the one or more fragments of the test primitive.

A fragment of the test primitive is selected at 712 and an early depth test is performed at 714. The early depth test compares the depth map value of the selected fragment with a corresponding value or values stored in the depth buffer during rendering of the scene. The term "early" refers to the depth test being performed prior to the processing of the fragment by a pixel/fragment shader. For a pixel shader programmable using DirectX HLSL, the early depth test may be forced by marking the pixel shader with the attribute earlydepthstencil. The depth test may be performed in combination with a stencil test, though it is also possible for the stencil test to be disabled. Writing to the depth buffer may be disabled for the auxiliary rendering process, in order to ensure that the depth/stencil tests performed for the purpose of viewability testing (including the early depth test at 714 and any other depth tests) do not create artefacts in the depth buffer that may affect subsequent processes dependent on the depth buffer.

If, and only if, the early depth test at 714 is passed (meaning that the depth map value for the fragment implies a lesser or equal distance from the camera than the corresponding one or more depth map values stored in the depth buffer), then a pixel shader is executed at 716. The pixel shader is configured to write a value to an element of a compute buffer. In the present example, the pixel shader writes to an element of the compute buffer initialized at 702, the element having an index depending on the primitive identifier of the test primitive. If the primitive identifiers for the test primitives are stored as integer indexes running from 0 to N-1, then the pixel shader may write a value to an element having a corresponding index in the compute buffer. Alternatively, an index of the compute buffer may be calculated from the primitive identifier, in which case it should be ensured that different primitive identifiers result in values being written to different elements of the compute buffer. For efficiency, a compute buffer with N integer or binary elements may be initialized with all elements set to 0, and a nonzero value such as 1 written to the indexed element by the pixel shader, though other examples are possible in which the compute buffer is initialized with non-zero values and/or the pixel shader writes non-unitary values to the compute buffer. As an alternative, a compute buffer may be initialized with an element count ("size") initially set to zero. Each time the pixel shader is executed, a value is written (appended) to an element of the compute buffer with index equal to the current element count (size), and the element count is increased by one (i.e. buffer[size]=id followed by size=size+1, orbuffer [si ze++] =id in C shorthand). The value written to the compute buffer depends on the primitive identifier, making it possible to determine for which primitives the pixel shader has been executed, and therefore which points are visible.

The pixel shader, or a render state applied to the pixel shader, is configured not to output any pixels to the render target. This ensures that the auxiliary rendering process implements the occlusion detection stage without causing artefacts to appear in the viewport, and may be implemented for example by setting the color write mask to 0. It is noted that the pixel shader must be forced to run, and not be disabled, even when the pixel shader doesn't output to render targets or the depth buffer (or depth-stencil surface).

The steps 704-716 are performed for every fragment of every test primitive, parallelized across threads of the GPU 210. When the auxiliary rendering process is complete, elements of the compute buffer corresponding to test primitives for which at least one fragment passed the depth test have a different value from the elements of the compute buffer corresponding to test primitives for which none of the fragments passed the depth test. The method 700 proceeds with reading, at 718, the compute buffer to determine which of the points are visible from the perspective of the virtual camera. The reading of the compute buffer may be performed using synchronous or asynchronous readback from the GPU, where asynchronous readback advantageously avoids introducing stalls due to render pipeline synchronization. In the simple case that the elements of the compute buffer are initialized to 0 and the pixel shader is configured to write the value 1, the number of points visible from the perspective of the virtual camera is given by the sum of the elements of the compute buffer. In this case that the compute buffer is updated using append writes as described above, the number of visible points may be determined by reading the size of the buffer.

The method 700 has the advantage that the entire method may be performed on the GPU 210, without the need to write the depth buffer to the host memory 208. In particular, the GPU 210 may be configured to perform tiled rendering, in which the viewport is divided into tiles to be rendered sequentially. In this case, for each tile the GPU 210 uses a fast, small cache of on-board memory for reads and writes, including reads and writes to the depth buffer, until a list of graphics commands using the same render targets and depth/stencil surfaces has been processed. This may significantly reduce latency in the viewability testing process, particularly for mobile devices.

As an alternative to configuring a custom graphics pipeline for viewability testing, the depth map comparison at 322 may be implemented using a compute shader if such a shader is available. Using a compute shader may lead to a more efficient viewability testing routine compared with other types of shader (such as a pixel shader) because compute shaders are able to operate independently of other parts of the graphics pipeline. As a further alternative, the depth buffer 228 may be read back from the GPU memory 212 to the host memory 208 and the depth map comparison may then be performed by the host processing circuitry 206 (e.g. the CPU).

In the example of Fig. 6, the points of the advert surface 406 occluded by the object 408 have depth map values indicating a greater distance from the virtual camera than the corresponding depth map values of the depth buffer, which are depth map values for points of the advert surface 406 that are not occluded by the object 408 and are nearest to the camera. These occluded points (represented by white circles) are therefore discarded from the set. By contrast, the nonoccluded points of the advert surface 406 (represented by black circles) are not discarded.

The method 300 concludes with counting, at 324, how many points of the generated set remain after points have been discarded during field of view testing at 318 and depth comparison at 322. The extent to which the object is visible from the perspective of the virtual camera is proportional to the number of remaining points. In cases where tiled rendering is used and an object appears across multiple tiles, contributions from the different tiles may be combined (the combining may be performed automatically for implementations in which the compute buffer is indexed by the primitive identifier). The extent to which the object is visible may refer to a proportion of the surface that is visible, which may be computed either by (i) dividing the number of remaining points by the total number of generated points, or (ii) dividing the number of remaining points by the number of points within the field of view of the virtual camera and multiplying the result by the proportion of the area of the surface lying within the field of view of the virtual camera. In the example of Fig. 6, fifteen of the thirty-three points of the advert surface 406 are determined to be visible from the perspective of the virtual camera. The proportion of the advert surface 406 which is visible from the perspective of the virtual camera is therefore determined to be 15/33 = 45%.

Alternatively, the extent to which the object is visible may refer to a proportion of the viewport taken up by the object. If the number of points is proportional to the on-screen size of the surface, the proportion of the viewport taken up by the object may be calculated by dividing the number of remaining points by the number of points which would fit on a surface covering the entire viewport. Alternatively, the proportion of the viewport taken up by the object may be determined by dividing the number of remaining points by the number of points within the field of view of the virtual camera and multiplying the result by the projected area of the (clipped) surface in NDC space divided by the total area of the field of view in NDC space (which is 4, assuming NDC space is normalized to [-1,1]).

As an alternative to counting the number of remaining points at 324, a respective area taken up by each remaining point (for example as a proportion of the area of the viewport) may be determined in dependence on the distribution of points and the position and orientation of the object, in which case a sum of these areas may be used to give the desired result.

Evaluations of either metric described above may be used to generate impression data or other summary data, for example to be transferred to a remote server system as described above with reference to Fig. 1.

In examples where the depth comparison at 322 is performed using the GPU 210, counting the number of remaining points may include performing synchronous or asynchronous readback from the GPU memory 212. Further rendering steps may be scheduled after the depth map comparison at 322, and before the counting. The further rendering steps may include, for example, post-processing or lighting in the case that deferred shading is used. In some cases, one or more further frames may be rendered in full before the readback is performed. The inventors have found that, with modern GPUs and drivers, rendering 4 frames is sufficient to minimize the lag. By scheduling additional rendering steps, it is expected that depth map comparison at 322 will be complete for all points before the count is performed, reducing lag and improving the responsiveness of the viewability measurement.

In the example of Fig. 6, fifteen of the points of the advert surface 406 are determined to be visible from the perspective of the virtual camera. Eighteen points of the advert surface 406 are determined not to be visible from the perspective of the virtual camera. The proportion of the advert surface 406 which is visible from the perspective of the virtual camera is therefore determined to be 15/(15+18) = 15/33 = 45%.

It is desirable to keep the computational cost of viewability testing low, in particular compared with the computational cost of rendering a scene, in order that the occlusion testing can be performed at a sufficiently high frequency to capture changing degrees of occlusion, without negatively impacting the performance of the gaming device. In order to achieve this, the number of points used for occlusion testing may be chosen to be considerably less than the number of pixels of display space occupied by the rendered advert (for example, less than 1%). In cases where an advert is occluded by an object with fine-scale detail, i.e. containing gaps on a scale comparable to or smaller than the spacing between the points, the extent to which the advert is determined to be occluded may depend strongly on the exact positions of the points, and may lead to erroneous results. The problem may be compounded in scenarios where the apparent motion of the occluding object(s) relative to the advert is negligible (for example when the virtual camera, the advert, and the occluding object(s) are stationary relative to one another and/or for very distant objects). Such scenarios are common in many types of video game.

To address the above problem, in order to determine an extent to which an object in a computer-generated scene is visible when viewed from a perspective of a virtual camera, a respective set of points may be generated for each of a plurality of image frames in which the scene is rendered from the perspective of the virtual camera. The techniques described herein may then be used to determine, for each of the plurality of image frames, which points of the respective set of points are visible from the perspective of the virtual camera. The extent to which the object is visible may then be determined in dependence on which points of the respective set of points are determined to be visible in each of the plurality of image frames. The positions of at least some of the generated points relative to the surface of the object may vary between the plurality of image frames. For example, the positions of the points may be offset from a set of initial positions, in directions parallel to the surface, by vectors which vary between the different image frames. The offsets for a given image frame may be the same or different for different points. Alternatively, a set of candidate positions with respect to the surface may be determined for each point, and different candidate positions may be selected for different image frames.

The positions of the points may vary according to a predetermined pattern, or the positions of the points in each set may be substantially independent of the positions of the points in any previously-generated set. It is preferable that the positions do not vary according to a pattern which is too simple and regular. A pattern which is too simple and regular may result in the variation of point positions accidentally correlating with the apparent motion of an occluding object relative to the surface of the object being tested. In this case, fine-scale detail of the occluding object may track the positions of the points such that the points do not effectively sample the fine-scale detail of the occluding object. This issue may be particularly acute where the characteristic speed at which the points move between frames is not significantly higher than the speed at which the occluding object moves.

One way to make the variation of point positions sufficiently complex to mitigate the problem described above is for the positions of the points to vary between image frames in dependence on an output of a random, pseudorandom, or quasi-random number generator. Although the contribution from any single image frame will be subject to noise, provided the points depend on the number generator in a suitable manner, the accuracy of the viewability estimate will statistically increase with the number of image frames. In one example, the position of each point may be sampled independently from anywhere on the surface for each image frame. In a further example, the surface may be divided into multiple regions distributed substantially evenly across the surface of the object, for example as a grid with each grid square (or other shape depending on the type of grid) corresponding to a region. For each image frame, a point may then be sampled independently from each of the determined regions, ensuring that the density of points may be approximately even across the surface for each image frame, which may reduce the number of image frames required to achieve an accurate viewability estimate compared with randomly sampling points over the entire surface.

Random numbers may be generated by a hardware random number generator. Alternatively, a pseudorandom number generator or deterministic random bit generator (DRBG) can generate a sequence of numbers which approximates a sequence of truly random numbers but is completely determined by an initial seed value. Despite not generating truly random numbers, pseudorandom number generators are straightforward to implement in software and can generate numbers at a high rate with low computational cost. A quasi-random number generator is similar to a pseudorandom number generator but generates a low discrepancy sequence of numbers for which the proportion of terms in the sequence falling in a subinterval is approximately proportional to the length of the subinterval, or in other words the sequence approximates an equidistributed or uniformly distributed sequence. In the context of the present disclosure, a quasi-random number generator can be used to generate sets of points whose union over multiple image frames is substantially evenly distributed across the surface of the object. An example of a low discrepancy sequence on which a quasi-random number generator can be based is a Halton sequence.

The above embodiments are to be understood as illustrative examples. Further embodiments are envisaged. For example, although the disclosure is concerned with determining advertising impressions within a video game environment, equivalent principles may be applied in any situation where it is desired to determine whether a surface, object, or region within a scene is visible from a perspective of a virtual camera, for example to trigger events in a video game or virtual reality environment in dependence on a user viewing objects in the environment.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

The present disclosure includes the following numbered clauses:
1. A system configured to determine an extent to which an object in a computer-generated scene is visible when viewed from a perspective of a virtual camera, the system comprising:
   a rendering engine configured to render the computer-generated scene from the perspective of the virtual camera, the rendering comprising storing, in a depth buffer, depth map data corresponding to a depth map of at least part of the computer-generated scene and comprising respective depth map values at pixel locations spanning at least part of a field of view of the virtual camera; and
   a viewability testing module configured to:
      generate a plurality of points distributed substantially evenly across a surface of the object;
      for each point of the plurality of points lying within said at least part of the field of view of the virtual camera:
         determine a respective depth map value from the perspective of the virtual camera; and
         determine, using the depth map data stored in the depth buffer, whether the point is visible from the perspective of the virtual camera based on a comparison between the determined depth map value for the point and a corresponding one or more of the depth map values stored in the depth buffer; and
         determine the extent to which the object is visible in dependence on which of the plurality of points lying within said at least part of the field of view of the virtual camera are determined to be visible from the perspective of the virtual camera.
2. The system of clause 1, wherein storing the depth map data comprises:
   determining fragments of a set of rendering primitives of the computer-generated scene, each fragment having a pixel location within said at least part of the field of view of the virtual camera;
   initializing the depth buffer to indicate, for each pixel location within said at least part of the field of view of the virtual camera, a maximum distance from the virtual camera representable by a depth map value; and
   for each determined fragment, determining a depth map value and, if the determined depth map value for the fragment indicates a lesser or equal distance from the virtual camera than the depth map value currently stored in the depth buffer at the pixel location of the fragment, overwriting said depth map value currently stored in the depth buffer with the determined depth map value for the fragment.
3. The system of clause 2, wherein the overwriting of said depth map value currently stored in the depth buffer is dependent on the fragment having an alpha value greater than a predetermined threshold.
4. The system of any preceding clause, wherein:
   the surface of the object comprises at least part of each of a plurality of rendering polygons;
   the viewability testing module is arranged to generate the plurality of points based on one or more test polygons which match or approximate the surface of the object; and
   the number of test polygons which match or approximate the surface of the object is less than the number of rendering polygons in said plurality of rendering polygons.
5. The system of any preceding clause, wherein the rendering engine comprises a GPU and the viewability testing module is at least partially implemented by one or more shaders within the GPU.
6. The system of clause 5, wherein the determining of whether each point of the plurality of points lying within said at least part of the field of view of the virtual camera is visible from the perspective of the virtual camera comprises:
   populating an input texture or input buffer with test elements indicating respective depth map values for the plurality of points lying within said at least part of the field of view of the virtual camera; and
   processing the depth buffer and the input texture or input buffer using the one or more shaders to populate an output texture or output buffer comprising a representation of how many of the test elements indicate a lesser or equal distance from the virtual camera than the corresponding one or more depth map values stored in the depth buffer.
7. The system of clause 5, wherein for each point of the plurality of points lying within said at least part of the field of view of the virtual camera, determining whether said point is visible from the perspective of the virtual camera comprises:
   performing an auxiliary rendering process for a test primitive having an associated primitive identifier and comprising one or more vertices positioned in accordance with said point, the auxiliary rendering process comprising:
      determining one or more fragments of the test primitive; and
      for each of the determined one or more fragments of the test primitive:
         performing a depth test, whereby to compare a depth map value of the fragment to a corresponding one or more depth map values stored in the depth buffer; and
         dependent on an outcome of the depth test, executing a pixel shader configured to write data to an element of a data buffer within memory of the GPU, the element and/or the data depending on the associated primitive identifier; and
   determining whether said point is visible from the perspective of the virtual camera dependent on whether the pixel shader has written data to said element of the data buffer,
   wherein the pixel shader and/or a render state associated with the pixel shader is configured not to output any pixels to a rendering target of the rendering engine.
8. The system of clause 7, wherein the pixel shader and/or the render state associated with the pixel shader is further configured not to write data to the depth buffer.
9. The system of clause 5, wherein the determining of whether each point of the plurality of points is visible from the perspective of the virtual camera is performed by a compute shader.
10. The system of any of clauses 5 to 9, wherein:
   determining the extent to which the object is visible in dependence on which of the plurality of points are determined to be visible from the perspective of the virtual camera comprises performing synchronous or asynchronous readback from video RAM of the GPU; and
   the system is configured to schedule further rendering between determining whether the points are visible from the perspective of the virtual camera and performing the synchronous or asynchronous readback.
11. The system of any of clauses 5 to 10, wherein the GPU is configured to store the depth buffer in video RAM
12. The system of clause 11, wherein:
   the rendering engine is configured to divide the field of view of the virtual camera into a plurality of tiles; and
   said at least part of the field of view of the virtual camera corresponds to one of the plurality of tiles.
13. The system of clause 12, wherein:
   at least one of the plurality of points lies within a further tile of the plurality of tiles; and
   determining the extent to which the object is visible further depends on whether said at least one of the plurality of points is determined to be visible from the perspective of the virtual camera.
14. The system of any preceding clause, wherein the viewability testing module is arranged to generate the plurality of points such that the number of generated points depends on dimensions of the surface of the object as viewed from the perspective of the virtual camera.
15. The system of any preceding clause, wherein determining whether each point of the plurality of points is visible from the perspective of the virtual camera is further based on whether the point lies within a field of view of the virtual camera.
16. The system of any preceding clause, wherein for at least one point of the plurality of points, the determining of whether the point is visible from the perspective of the virtual camera is based on a comparison between the determined depth map value for the point and an interpolated depth map value derived from a plurality of corresponding depth map values stored in the depth buffer.
17. The system of any preceding clause, wherein the plurality of points contains fewer points than a number of pixels spanned by the surface when viewed from the perspective of the virtual camera.
18. The system of any preceding clause, wherein prior to determining whether the points are visible from the perspective of the virtual camera, the viewability testing module is configured to offset the plurality of points from the surface of the object in a direction towards the virtual camera or in a substantially outward direction with respect to the surface of the object.
19. The system of any preceding clause, wherein the offsetting is by a distance that increases with distance of the point from the virtual camera.
20. The system of any preceding clause, wherein the viewability testing module is prohibited from offsetting points to positions closer to the virtual camera than a near plane of the virtual camera.
21. The system of any preceding clause, arranged to associate an advertisement with the surface of the object in dependence on stored advertisement data, wherein said rendering comprises rendering the advertisement on the surface of the object.
22. The system of any preceding clause, arranged to generate summary data indicative of the determined extent to which the object is visible from the perspective of the virtual camera.
23. The system of any preceding clause, arranged to generate the computer-generated scene in dependence on video game code.
24. The system of any preceding clause, wherein:
   the rendering engine is configured to render the computer-generated scene in frames at a first frequency; and
   the viewability testing module is configured to determine the extent to which the object is visible at a second frequency lower than the first frequency.
25. The system of any preceding clause, wherein the viewability testing module is configured to:
   generate, for each of a plurality of image frames in which the scene is rendered from the perspective of the virtual camera, a respective set of points distributed across the surface of the object; and
   determine the extent to which the object is visible in dependence on which points of the respective set of points are determined to be visible in each of the plurality of image frames,
   wherein the positions of at least some of the generated points relative to the surface of the object vary between the plurality of image frames.
26. The system of clause 25, wherein the positions of at least some of the generated points relative to the surface of the object vary between image frames in dependence on outputs of a random, pseudorandom, or quasi-random number generator.
27. The system of clause 25 or 26, wherein the positions of the points generated over the entirety of the plurality of image frames are substantially evenly distributed across the surface of the object.
28. A method of determining an extent to which an object in a computer-generated scene is visible when viewed from a perspective of a virtual camera, the method comprising:
   rendering the computer-generated scene from the perspective of the virtual camera, said rendering comprising storing, in a depth buffer, depth map data corresponding to a depth map of at least part of the computer-generated scene and comprising respective depth map values at pixel locations spanning at least part of a field of view of the virtual camera;
   generating a plurality of points distributed substantially evenly across a surface of the object;
   for each point of the plurality of points lying within said at least part of the field of view of the virtual camera:
      determining a respective depth map value from the perspective of the virtual camera; and
      determining, using the depth map data stored in the depth buffer, whether the point is visible from the perspective of the virtual camera based on a comparison between the determined depth map value for the point and a corresponding one or more of the depth map values stored in the depth buffer; and
   determining the extent to which the surface is visible in dependence on which of the plurality of points lying within said at least part of the field of view of the virtual camera are determined to be visible from the perspective of the virtual camera.
29. The method of clause 28, wherein storing the depth map data comprises:
   determining fragments of a set of rendering primitives of the computer-generated scene, each fragment having a respective pixel location within said at least part of the field of view of the virtual camera;
   initializing the depth buffer to indicate, for each pixel location within said at least part of the field of view of the virtual camera, a maximum distance from the virtual camera representable by a depth map value; and
   for each determined fragment, determining a depth map value and, if the determined depth map value for the fragment indicates a lesser or equal distance from the virtual camera than a depth map value currently stored in the depth buffer at the pixel location of the fragment, overwriting said depth map value currently stored in the depth buffer with the determined depth map value for the fragment.
30. The method of clause 29, wherein the overwriting of said depth map value currently stored in the depth buffer is dependent on the fragment having an alpha value greater than a predetermined threshold.
31. The method of clause 30, wherein for each point of the plurality of points lying within said at least part of the field of view of the virtual camera, determining whether said point is visible from the perspective of the virtual camera comprises:
   performing an auxiliary rendering process for a test primitive having an associated primitive identifier and comprising one or more vertices positioned in accordance with said point, the auxiliary rendering process comprising:
      determining one or more fragments of the test primitive; and
      for each of the determined one or more fragments of the test primitive:
         performing a depth test, whereby to compare a depth map value of the fragment to a corresponding one or more depth map values stored in the depth buffer; and
         dependent on an outcome of the depth test, executing a pixel shader configured to write data to an element of a data buffer, the element and/or the data depending on the associated primitive identifier; and
   determining whether said point is visible from the perspective of the virtual camera dependent on whether the pixel shader has written data to said element of the data buffer,
   wherein the pixel shader and/or a render state associated with the pixel shader is configured not to output pixels to any rendering target.
32. The method of clause 31, wherein the pixel shader and/or the render state associated with the pixel shader is further configured not to write data to the depth buffer.
33. The method of clause 31 or 32, comprising dividing the field of view of the virtual camera into a plurality of tiles,
   wherein said at least part of the field of view of the virtual camera corresponds to one of the plurality of tiles.
34. The method of clause 33, wherein:
   at least one of the plurality of points lies within a further tile of the plurality of tiles; and
   determining the extent to which the object is visible further depends on whether said at least one of the plurality of points is determined to be visible from the perspective of the virtual camera.
35. A non-transient storage medium comprising computer-readable instructions which, when executed by a computing system, cause the computing system to perform a method of determining an extent to which an object in a computer-generated scene is visible when viewed from a perspective of a virtual camera, the method comprising:
   rendering the computer-generated scene from the perspective of the virtual camera, said rendering comprising storing, in a depth buffer, depth map data corresponding to a depth map of at least part of the computer-generated scene and comprising respective depth map values at pixel locations spanning at least part of a field of view of the virtual camera;
   generating a plurality of points distributed substantially evenly across a surface of the object;
   for each point of the plurality of points lying within said at least part of the field of view of the virtual camera:
      determining a respective depth map value from the perspective of the virtual camera; and
      determining whether the point is visible from the perspective of the virtual camera based on a comparison between the determined depth map value for the point and a corresponding one or more of the depth map values stored in the depth buffer; and
   determining the extent to which the object is visible in dependence on which of the plurality of points lying within said at least part of the field of view of the virtual camera are determined to be visible from the perspective of the virtual camera.
36. A system configured to determine an extent to which an object in a computer-generated scene is visible when viewed from a perspective of a virtual camera, the system comprising memory and one or more processing units including a GPU, wherein the memory stores computer-readable instructions which, when executed by the processing circuitry, cause the system to:
   render, using the GPU, the computer-generated scene from the perspective of the virtual camera, the rendering comprising storing, in a depth buffer, depth map data corresponding to a depth map of at least part of the computer-generated scene and comprising respective depth map values at pixel locations spanning at least part of the field of view of the virtual camera;
   generate a plurality of points distributed substantially evenly across a surface of the object; and
   for each point of the plurality of points lying within said at least part of the field of view of the virtual camera:
      perform, using the GPU, an auxiliary rendering process for a test primitive having an associated primitive identifier and comprising one or more vertices positioned in accordance with said point, the auxiliary rendering process comprising:
         determining one or more fragments of the test primitive; and
         for each of the determined one or more fragments of the test primitive:
            performing a depth test, whereby to compare a depth map value of the fragment to a corresponding one or more depth map values stored in the depth buffer; and
            dependent on an outcome of the depth test, executing a pixel shader configured to write data to an element of a data buffer within memory of the GPU, the element and/or the data depending on the associated primitive identifier; and
      determine whether said point is visible from the perspective of the virtual camera dependent on whether the pixel shader has written data to said element of the data buffer; and
   determine the extent to which the object is visible in dependence on which of the plurality of points lying within said at least part of the field of view of the virtual camera are determined to be visible from the perspective of the virtual camera,
   wherein the pixel shader and/or a render state associated with the pixel shader is configured not to output any pixels to a rendering target of the rendering engine.
37. The system of clause 36, wherein the pixel shader and/or the render state associated with the pixel shader is further configured not to write data to the depth buffer.
38. The system of clause 36 or 37, wherein:
   the rendering engine is configured to divide the field of view of the virtual camera into a plurality of tiles;
   said at least part of the field of view of the virtual camera corresponds to one of the tiles of the plurality of tiles; and
   the depth buffer is located in memory of the GPU.
39. The system of clause 38, wherein:
   at least one of the plurality of points lies within a further tile of the plurality of tiles; and
   determining the extent to which the object is visible further depends on whether said at least one of the plurality of points is determined to be visible from the perspective of the virtual camera.
40. A method of determining an extent to which an object in a computer-generated scene is visible when viewed from a perspective of a virtual camera, the method comprising:
   rendering the computer-generated scene from the perspective of the virtual camera, said rendering comprising storing, in a depth buffer, depth map data corresponding to a depth map of at least part of the computer-generated scene and comprising respective depth map values at pixel locations spanning at least part of the field of view of the virtual camera;
   generating a plurality of points distributed substantially evenly across a surface of the object;
   for each point of the plurality of points lying within said at least part of the field of view of the virtual camera, perform an auxiliary rendering process for a test primitive having an associated primitive identifier and comprising a vertex positioned in accordance with said point, the auxiliary rendering process comprising:
      determining one or more fragments of the test primitive; and
      for each of the determined one or more fragments of the test primitive:
         performing a depth test, whereby to compare a depth map value of the fragment to a corresponding one or more depth map values stored in the depth buffer; and
         dependent on an outcome of the depth test, executing a pixel shader configured to write data to an element of a data buffer, the element and/or the data depending on the associated primitive identifier; and
      determining whether said point is visible from the perspective of the virtual camera dependent on whether the pixel shader has written data to said element of the data buffer; and
   determining the extent to which the object is visible in dependence on which of the plurality of points lying within said at least part of the field of view of the virtual camera are determined to be visible from the perspective of the virtual camera,
   wherein the pixel shader and/or a render state associated with the pixel shader is configured not to output any pixels to any rendering target.
41. The method of clause 40, wherein the pixel shader and/or the render state associated with the pixel shader is further configured not to write data to the depth buffer.
42. The method of clause 40 or 41, comprising dividing the field of view of the virtual camera into a plurality of tiles,
   wherein said at least part of the field of view of the virtual camera corresponds to one of the plurality of tiles.
43. The method of clause 42, wherein:
   at least one of the plurality of points lies within a further tile of the plurality of tiles; and
   determining the extent to which the object is visible further depends on whether said at least one of the plurality of points is determined to be visible from the perspective of the virtual camera.

## Claims

1. A computer-implemented method of determining an extent to which an object in a computer-generated scene is visible when viewed from a perspective of a virtual camera, the method comprising:
rendering the computer-generated scene from the perspective of the virtual camera, said rendering comprising storing, in a depth buffer, depth map data corresponding to a depth map of at least part of the computer-generated scene and comprising respective depth map values at pixel locations spanning at least part of a field of view of the virtual camera;
generating a plurality of points distributed substantially evenly across a surface of the object;
for each point of the plurality of points lying within said at least part of the field of view of the virtual camera:
determining a respective depth map value from the perspective of the virtual camera; and
determining, using the depth map data stored in the depth buffer, whether the point is visible from the perspective of the virtual camera based on a comparison between the determined depth map value for the point and a corresponding one or more of the depth map values stored in the depth buffer; and
determining the extent to which the surface is visible in dependence on which of the plurality of points lying within said at least part of the field of view of the virtual camera are determined to be visible from the perspective of the virtual camera.

2. The computer-implemented method of claim 1, wherein storing the depth map data comprises:
determining fragments of a set of rendering primitives of the computer-generated scene, each fragment having a pixel location within said at least part of the field of view of the virtual camera;
initializing the depth buffer to indicate, for each pixel location within said at least part of the field of view of the virtual camera, a maximum distance from the virtual camera representable by a depth map value; and
for each determined fragment, determining a depth map value and, if the determined depth map value for the fragment indicates a lesser or equal distance from the virtual camera than the depth map value currently stored in the depth buffer at the pixel location of the fragment, overwriting said depth map value currently stored in the depth buffer with the determined depth map value for the fragment.

3. The computer-implemented method of claim 1 or 2, wherein:
the surface of the object comprises at least part of each of a plurality of rendering polygons;
the viewability testing module is arranged to generate the plurality of points based on one or more test polygons which match or approximate the surface of the object; and
the number of test polygons which match or approximate the surface of the object is less than the number of rendering polygons in said plurality of rendering polygons.

4. The computer-implemented method of any preceding claim, at least partially implemented by one or more shaders within a GPU.

5. The computer-implemented method of claim 4, wherein the determining of whether each point of the plurality of points lying within said at least part of the field of view of the virtual camera is visible from the perspective of the virtual camera comprises:
populating an input texture or input buffer with test elements indicating respective depth map values for the plurality of points lying within said at least part of the field of view of the virtual camera; and
processing the depth buffer and the input texture or input buffer using the one or more shaders to populate an output texture or output buffer comprising a representation of how many of the test elements indicate a lesser or equal distance from the virtual camera than the corresponding one or more depth map values stored in the depth buffer.

6. The computer-implemented method of claim 4, wherein for each point of the plurality of points lying within said at least part of the field of view of the virtual camera, determining whether said point is visible from the perspective of the virtual camera comprises:
performing an auxiliary rendering process for a test primitive having an associated primitive identifier and comprising one or more vertices positioned in accordance with said point, the auxiliary rendering process comprising:
determining one or more fragments of the test primitive; and
for each of the determined one or more fragments of the test primitive:
performing a depth test, whereby to compare a depth map value of the fragment to a corresponding one or more depth map values stored in the depth buffer; and
dependent on an outcome of the depth test, executing a pixel shader configured to write data to an element of a data buffer within memory of the GPU, the element and/or the data depending on the associated primitive identifier; and
determining whether said point is visible from the perspective of the virtual camera dependent on whether the pixel shader has written data to said element of the data buffer,
wherein the pixel shader and/or a render state associated with the pixel shader is configured not to output any pixels to a rendering target of the rendering engine.

7. The system of claim 6, wherein the pixel shader and/or the render state associated with the pixel shader is further configured not to write data to the depth buffer.

8. The computer-implemented method of any of claims 4 to 7, wherein:
determining the extent to which the object is visible in dependence on which of the plurality of points are determined to be visible from the perspective of the virtual camera comprises performing synchronous or asynchronous readback from video RAM of the GPU; and
the system is configured to schedule further rendering between determining whether the points are visible from the perspective of the virtual camera and performing the synchronous or asynchronous readback.

9. The computer-implemented method of any of claims 4 to 8, wherein:
the GPU is configured to store the depth buffer in video RAM
the rendering of the computer-generated scene comprises dividing the field of view of the virtual camera into a plurality of tiles;
said at least part of the field of view of the virtual camera corresponds to one of the plurality of tiles;
at least one of the plurality of points lies within a further tile of the plurality of tiles; and
determining the extent to which the object is visible further depends on whether said at least one of the plurality of points is determined to be visible from the perspective of the virtual camera.

10. The computer-implemented method of any preceding claim, wherein the plurality of points contains fewer points than a number of pixels spanned by the surface when viewed from the perspective of the virtual camera.

11. The computer-implemented method of any preceding claim, wherein prior to determining whether the points are visible from the perspective of the virtual camera, the viewability testing module is configured to offset the plurality of points from the surface of the object in a direction towards the virtual camera or in a substantially outward direction with respect to the surface of the object.

12. The computer-implemented method of any preceding claim, comprising:
generating, for each of a plurality of image frames in which the scene is rendered from the perspective of the virtual camera, a respective set of points distributed across the surface of the object; and
determining the extent to which the object is visible in dependence on which points of the respective set of points are determined to be visible in each of the plurality of image frames,
wherein the positions of at least some of the generated points relative to the surface of the object vary between the plurality of image frames.

13. The computer-implemented method of claim 12, wherein the positions of at least some of the generated points relative to the surface of the object vary between image frames in dependence on outputs of a random, pseudorandom, or quasi-random number generator.

14. A data processing system comprising means for carrying out the method of any of claims 1 to 13.

15. A computer program product comprising instructions which, when the program is executed by a computer, cause the computer to carry out the method of any of claims 1 to 13.
